# EUROPÄISCHE PATENTSCHRIFT

(11) **EP 2 836 810 B1**
(45) Veröffentlichungstag und Bekanntmachung des Hinweises auf die Patenterteilung: **05.09.2018**
(21) Anmeldenummer: 13715692.3
(22) Anmeldetag: 11.04.2013
(51) Int. Cl.: G01M 17/007, C04B 35/622, B29C 64/386, B29C 64/153, B23Q 35/00, B23Q 17/24, B22F 3/105, B22F 3/00

(54) **FAHRBAHNBELAGELEMENTE FÜR EINEN ROLLENPRÜFSTAND**
CARRIAGEWAY SURFACE ELEMENTS FOR A ROLLER TEST RIG
ÉLÉMENTS DE REVÊTEMENT DE CHAUSSÉE POUR UN BANC D'ESSAI À ROULEAUX

(30) Priorität: 12.04.2012 DE 102012205985
(43) Veröffentlichungstag der Anmeldung: 18.02.2015
(73) Patentinhaber: AIP GmbH & Co. KG, 87490 Haldenwang (DE)
(72) Erfinder: HARTMANN, Christian, 87452 Altusried (DE); KNESTEL, Anton, 87496 Hopferbach (DE); BECHERER, Thomas, 87463 Dietmannsried (DE)
(74) Vertreter: MERH-IP Matias Erny Reichl Hoffmann Patentanwälte PartG mbB
(86) Internationale Anmeldenummer: PCT/EP2013/057622
(87) Internationale Veröffentlichungsnummer: WO 2013/153175

(56) Entgegenhaltungen:
- DE-A1- 10 107 870
- DE-C1- 10 141 973

## Beschreibung

Die vorliegende Erfindung betrifft ein Verfahren zur Herstellung von Fahrbahnbelagelementen, die insbesondere auf Rollen von Rollenprüfständen montierbar sein können.

Mittels Fahrbahnbelagselementen (Belagschalen), die auf Rollen von Rollenprüfständen montiert werden, werden Akustikmessungen an Kraftfahrzeugen durchgeführt. Dabei wird die Geräuschentwicklung auf bestimmten Fahrbahnuntergründen bzw. -belägen getestet. Die erfindungsgemäß hergestellten Fahrbahnbelagelemente bilden mit erhöhter Genauigkeit jede Art von Fahrbahnbelag bzw. dessen Oberflächenkontur ab und können zudem weniger aufwendig hergestellt werden. Desweiteren ist ein wichtiger Vorteil des erfindungsgemäßen Verfahrens, dass Störgeräuschquellen bereits bei der Herstellung der Fahrbahnbelagelemente weniger aufwendig entfernt werden können.

Eine Störgeräuschquelle ist insbesondere der Übergang zwischen einzelnen Fahrbahnbelagelementen bzw. zwischen deren (Längs-)Kanten. Nicht homogene, diskontinuierliche (nicht aufeinander angepasste) Übergänge sind im Hinblick auf eine reduzierte Störgeräuschentwicklung insbesondere zu vermeiden. Herkömmlicherweise wird zur Herstellung von Fahrbahnbelagelementen ein Abdruck eines realen Fahrbahnbelag genommen wird, der zum Erstellen einer Gussform herangezogen wird. Die Gussformen müssen ringförmig oder kreisbogenförmig gefertigt werden, damit die Fahrbahnelemente auf die Rollen des Prüfstandes montiert werden können. Dazu werden die nicht-gekrümmten, streifenförmigen Abdrücke oder die Gussformen in eine Ringform oder gekrümmte Form überführt, wobei die beiden in Längsrichtung angeordneten Endbereiche des streifenförmigen Abschnittes zusammenfügt werden. Die beiden Endbereichen weisen jedoch in der Regel unterschiedliche Höhenwerte bzw. eine
unterschiedliche Oberflächenkontur auf, so dass Diskontinuitäten am Übergang die Folge sind. Der Übergang ist dann eine Störgeräuschquelle, wenn ein Fahrzeugrad während des Fahrzeugtests wiederholt über den Übergang rollt.

Bekannt ist aus der DE 101 41 973 C1, dass Fahrbahnbelagsegmente nicht als eine detailgetreue Abbildung eines Fahrbahnbelages hergestellt werden. Es werden in einer Binderschicht, z.B. Kunststoff, Steine mit einer vorbestimmten Größe eingebracht, die ein Höhenprofil eines Fahrbahnbelages nachahmen. Hierbei ergibt sich ein diskontinuierlicher Übergang wie oben beschrieben, da an den Trennstellen der einzelnen Belgschalensegmente, insbesondere bei der Verwendung von gröberen Steinen, die naturbedingte Form der Steine eine Anpassung erheblich erschwert. Nachteilig ist ferner, dass keine naturgetreue Nachbildung eines Fahrbahnbelages erstellt wird. Desweiteren kann die Abriebfestigkeit durch sich lösende Steine reduziert sein.

DE 101 07 870 A1 beschreibt eine Laufrolle eines Rollenprüfstandes für Straßenfahrzeuge mit einer strukturierten Lauffläche, welche radial abtragende Erhebungen aufweist sowie ein Verfahren zur Herstellung der Laufrolle.

Weiterhin ist bekannt, Fahrbahnbelagsegmenten dadurch herzustellen, dass, wie oben beschrieben, ein Abdruck eines Fahrbahnprofils genommen wird, z.B. mittels einer Modelliermasse. Der Abdruck wird zum Erstellen der Gussform verwendet. Mittels der Gussform wird ein Kunststoff in Form gegossen und ausgehärtet, so dass der Fahrbahnbelag bzw. dessen Profil von dem ausgehärteten Kunststoff wiedergeben wird. Der - Übergang zwischen den beiden Endbereichen des Abdruckes wird in Handarbeit nachmodelliert bevor der Kunststoff vollständig ausgehärtet ist. Insbesondere das Nachmodellieren ist eine komplexe Tätigkeit und zudem (zeit-) aufwendig.

Aufgabe der Erfindung ist es, ein Verfahren bereitzustellen, das eine weniger aufwendige Herstellung von Fahrbahnbelagelementen ermöglicht, die die Oberflächenkontur von Fahrbahnbelägen in optimaler Weise nachbilden, insbesondere um Störgeräusche beim Testen von Kraftfahrzeugen effektiver zu vermeiden.

Die Aufgabe wird durch die unabhängigen Ansprüche gelöst. Bevorzugte Weiterentwicklungen der vorliegenden Erfindung werden durch die abhängigen Ansprüche beschrieben.

Ein erfindungsgemäßes Verfahren zur Herstellung von zumindest einem Fahrbahnbelagelement, das auf Rollen von Rollenprüfständen montierbar sein kann, kann ein Erfassen einer Oberflächenkontur eines (abzubildenden) Fahrbahnbelags innerhalb eines im Wesentlichen streifenförmigen Abschnittes umfassen. Der erfasste streifenförmige Abschnitt kann in Längsrichtung eine vorbestimmte Länge und in Querrichtung eine vorbestimmte Breite aufweisen. Ferner kann der erfasste streifenförmige Abschnitt in Längsrichtung jeweils von einer Längskante begrenzt sein. Weiter kann das Verfahren umfassen ein Erzeugen eines digitalen Abbildes des erfassten Abschnittes mit Höhenwerten gemäß der Oberflächenkontur des Fahrbahnbelages. Das Verfahren kann weiter umfassen ein Herstellen des Fahrbahnbelagelementes gemäß dem digitalen Abbild mittels einer dreidimensionalen Herstellungstechnik.

Herstellung bzw. Herstellen von zumindest einem Fahrbahnbelagelement soll ferner alternatives umfassen, dass zunächst in einem Verfahren (Herstellungs-)daten hergestellt werden, die den abzubildenden Fahrbahnbelag derart wiedergeben, dass basierend auf den Herstellungsdaten ein oder mehrere Fahrbahnbelagelemente fertigbar sind. Desweiteren kann in einem weiteren Verfahren mit zumindest einem Fertigungsschritt, z.B. ein 3D-Drucken und/oder ein 3D-Fräsen, zumindest ein Fahrbahnbelagelement basierend auf den Herstellungsdaten hergestellt bzw. gedruckt bzw. gefräst werden. Die Herstellungsdaten umfassen bevorzugt die Daten des Abbildes des erfassten Fahrbahnbelages und/oder Anpassungen der Längskanten oder Endbereiche des Abbildes. Desweiteren können die Herstellungsdaten ein ringförmiges oder kreisbogenförmiges Abbild des erfassten Fahrbahnbelags umfassen.

Die Vorteile des erfindungsgemäßen Verfahrens sind, dass die Herstellung der Fahrbahnbelagelemente (Belagschalen) auch bei naturgetreuer Nachbildung eines zu simulierenden Fahrbahnbelages weniger zeitintensiv und weniger aufwendig ist. Um Störgeräusche beim Überfahren eines Übergangs(bereiches) zwischen den zusammengefügten Längskanten zu minimieren bzw. zu vermeiden, ist es ferner von Vorteil, dass gemäß der Erfindung eine Anpassung des Überganges (das heißt eine Anpassung der beiden Längskanten bzw. Endbereiche des erfassten Abschnittes aufeinander) an einem digitalen Abbild des Fahrbahnbelages durchgeführt werden kann. Weiterhin ist die erfindungsgemäße Herstellung der Fahrbahnbelagelemente weniger aufwendig durchführbar, da das materielle Erzeugen (Herstellen) der Fahrbahnbelagelemente mittels einer dreidimensionalen Herstellungstechnik basierend auf dem digitalen Abbild des erfassten Fahrbahnbelagabschnittes vorgenommen werden kann.

Der Begriff *"Fahrbahnbelagelemente"* (Belagschale) bezieht sich auf ein kreisbogenförmiges oder ringförmiges Element, das dazu geeignet ist, auf die Rolle eines Rollenprüfstandes montiert zu werden. Eine nach außen weisende Oberfläche im auf der Rolle montierten Zustand des Fahrbahnbelagelementes gibt die Oberflächenkontur des erfassten Fahrbahnbelages wieder. Es ist bekannt, dass Rollenprüfstände das Testen von Kraftfahrzeugen ermöglichen, wobei die Räder des zu testenden Kraftfahrzeuges auf großen Rollen des Rollenprüfstandes aufstehen. Je nach Art des Rollenprüfstandes können die Rollen unterschiedliche Breiten und Durchmesser aufweisen. Bevorzugt weisen die Rollen des Rollenprüfstandes einen Durchmesser von bis zu 2 m auf. Die Breite der Rollen beträgt bis zu 2 m. Ferner können auch zwei einzelne Rollen (nebeneinander) ä 1 m vorgesehen sein.

"Oberflächenkontur" bezeichnet im Wesentlichen die Wiedergabe einer Verteilung von Höhenwerten über einer horizontal angeordneten, ungekrümmten Fläche. In anderen Worten ergibt sich die Oberflächenkontur daraus, dass einer Vielzahl von Punkten mit Koordinaten x und y innerhalb einer vorbestimmten Fläche ein Höhenwert (z-Wert) zugeordnet ist. Im Folgenden soll unter x-Richtung die Längsrichtung des erfassten streifenförmigen Abschnittes verstanden werden. Unter dem Begriff y-Richtung soll die Querrichtung des streifenförmigen Abschnittes verstanden werden. Die z-Richtung weist in Richtung der Normalen der x-y-Ebene.

Der Begriff *"digitales Abbild"* soll umfassen jede Art von digitaler Darstellung der erfassten Oberflächenkontur des Fahrbahnbelages. Hierunter können insbesondere Darstellungen in Form von Tabellen von z-Werten, die xy-Punkten zugeordnet sind, oder grafische bzw. bildliche Darstellungen fallen. Wie bereits oben definiert wurde, ist ein Höhenwert ein z-Wert im oben definierten xyz-Koordinatensystem. Die Punkte in Längs- und Querrichtung, denen Höhenwerte zugeordnet sein können, können mittels einer Positionsangabe definiert sein, zum Beispiel einer Strecke in Längs- und Querrichtung oder mittels der xy-Koordinaten.

Unter dreidimensionaler Herstellungstechnik sind insbesondere 3D-Druckverfahren und/oder 3D-Fräsverfahren zu verstehen.

Ferner kann gemäß dem Verfahren ein Anpassen der Höhenwerte des digitalen Abbildes der beiden Längskanten aufeinander erfolgen, derart, dass die beiden Höhenprofile in Querrichtung (Querprofile) der beiden Längskanten nach der Anpassung im Wesentlichen miteinander übereinstimmen können.

Das Anpassen der Höhenwerte im rechten und linken Endbereich des erfassten streifenförmigen Abschnittes oder des äußersten Querprofils der beiden Längskanten erfolgt bevorzugt digital und dient dazu, dass ein Übergang zwischen den beiden Längskanten, wenn der streifenförmige Abschnitt in eine ringförmige Struktur zum Aufbringen auf die Rolle überführt wird, möglichst homogen ist. Das heißt, dass keine Störgeräusche beim Überrollen des Überganges mit dem Fahrzeugrad erzeugt werden.

Weiterhin kann das Verfahren eine Anpassung der Höhenwerte der beiden Längskanten aufeinander umfassen, die derart durchgeführt werden kann, dass die Höhenwerte der beiden Längskanten an gleicher Position in Querrichtung nach der Anpassung um weniger als einen vorgebestimmten Abweichungswert (Δ) voneinander abweichen können.

*"An gleicher Position in Querrichtung"* bedeutet, dass beide Positionen den gleichen y-Wert aufweisen.

Der vorbestimmte Abweichungswert ergibt sich aus dem Betrag einer Differenz von zwei Höhenwerten benachbarter Punkte in Längs- und/oder Querrichtung geteilt durch einen Vergleichshöhenwert. Ein maximaler vorbestimmter Abweichungswert liegt bei 50 %. Dies schließt Störgeräuschquellen bereits hinreichend aus. Ein besonders bevorzugter maximaler vorbestimmter Abweichungswert liegt bei 30 % und ein ganz besonders bevorzugter vorbestimmter Abweichungswert liegt bei kleiner oder gleich 10 %. Insbesondere bei einem Abweichungswert von kleiner 10% kann das Erzeugen von Störgeräuschen besonders effektiv unterdrückt werden.

Aufgrund der Anpassung der Höhenwerte im Hinblick auf einen vorbestimmten Abweichungswert kann sichergestellt werden, dass der Übergang zwischen den beiden Längskanten im zusammengefügten Zustand besonders homogen (gut angepasst) ist, so dass Störgeräusche besonders effektiv ausgeschlossen werden können.

Weiterhin kann die Anpassung der Höhenwerte innerhalb zumindest eines Endbereichs des digitalen Abbildes, der auf einer Seite von einer der beiden Längskanten begrenzt sein kann, durchgeführt werden. Der zumindest eine Endbereich kann eine vorbestimmte Länge ausgehend von der den Endbereich seitlich begrenzenden Längskante aufweisen.

Unter *"Endbereich des digitalen Abbildes"* ist zu verstehen, dass das digitale Abbild wie der erfasste streifenförmige Abschnitt länger als breiter ist, so dass das digitale Abbild einen rechten und einen linken Endbereich hat, der sich an die beiden Längskanten anschließt. Die Anpassung der Höhenwerte erfolgt zumindest innerhalb eines Endbereiches des digitalen Abbildes, das heißt die Anpassung der Höhenwerte wird innerhalb des zumindest einen Endbereiches, in dem die Anpassung durchgeführt wird, auf die Höhenwerte des anderen Endbereiches angepasst. Selbstverständlich können auch beide Endbereiche bzw. deren Höhenwerte aufeinander angepasst werden.

Die Länge des Endbereiches, in dem Höhenwerte aufeinander angepasst werden, kann vorbestimmt sein. Bevorzugt ist die Länge kleiner als 20 % der Gesamtlänge des digitalen Abbildes des erfassten Abschnittes. Besonders bevorzugt ist die Länge 10% der Gesamtlänge des Abbildes oder kleiner, so dass der Anpassungsaufwand minimal wird. Grundsätzlich gilt, dass je größer der Endbereich ist, der angepasst wird, die Anpassung einen optimaleren Übergang im Hinblick auf die Störgeräuschunterdrückung ergibt. Der Aufwand steigt hingegen mit der Größe des Endbereichs, der angepasst wird.

Wenn nicht nur die (äußersten) Querprofile der beiden Längskanten aufeinander angepasst werden, sondern Höhenwerte in einem Endabschnitt mit vorbestimmter Länge, so kann ein Übergang zwischen den beiden Längskanten noch genauer aufeinander abgestimmt werden, so dass Störgeräusche hocheffektiv unterdrückt werden.

Die vorbestimmte Länge des zumindest einen Endbereichs, in dem die Höhenwerte angepasst werden können, kann abhängig von der Anzahl der Maxima der Höhenwerte in Relation zu der Fläche des erfassten Abschnittes festgelegt (gewählt, bestimmt) werden. Weiterhin kann die Anzahl Maxima auch auf eine Teilfläche des erfassten Abschnittes bezogen werden. Weiterhin kann die vorbestimmte Länge auch abhängig von der Anzahl Minima der Höhenwerte oder einer Kombination von Maxima und Minima in Relation zu der Gesamtfläche oder einer Teilfläche des erfassten Abschnittes bestimmt werden. Ferner kann die vorbestimmte Länge zusätzlich oder alternativ zu der Abhängigkeit von der Anzahl Maxima/Minima je (Teil-)fläche auch in Abhängigkeit von (durchschnittlichen) Steigungswerten der Höhenwerte um die Extremwerte (Maxima/Minima) herum bestimmbar sein.

Maxima und Minima der Höhenwerte sind lokale Extremalwerte innerhalb der Fläche des erfassten Abschnittes. Lokale Extremalwerte lassen sich insbesondere bei einer grafischen Darstellung des Abbildes leicht identifizieren. Z.B. als Tiefstwerte eines "Tales" oder als Höchstwert eines "Hügels" in der grafischen Darstellung.

Die vorbestimmte Länge des zumindest einen Endbereiches, in dem die Höhenwerte angepasst werden können, kann abhängig von der Dichte der Extremwerte festgelegt werden. Die Dichte der Extremwerte ergibt sich aus der Anzahl Maxima und/oder Minima geteilt durch die Gesamtfläche des erfassten Abschnittes oder durch eine Teilfläche des erfassten Abschnittes. Bevorzugt wird zum Beispiel die Anzahl der Extremalwerte innerhalb einer Teilfläche eines Endbereiches des digitalen Abbildes des erfassten Abschnittes erfasst. Die Teilfläche kann z.B. eine Länge von 10 % der Gesamtlänge des erfassten Abschnittes ausgehend von der Längskante aufweisen kann und z.B. die Breite des erfassten Abschnittes. Bevorzugt wird bei großen Dichtewerten eine größere vorbestimmte Länge des Endbereiches gewählt und bei kleineren Dichtewerten eine kürzere vorbestimmte Länge. Zum Beispiel kann bei einer Dichte von 1, 10, 100 oder mehr Extremalwerten je m² die vorbestimmte Länge auf 10 % der Gesamtlänge des erfassten streifenförmigen Abschnittes gesetzt werden. Weiterhin kann zum Beispiel bei einer Dichte von größer 5000 Extremwerten je m² die vorbestimmte Länge auf 1 % der Gesamtlänge des erfassten streifenförmigen Abschnittes festgelegt werden.

Steigungswerte im Bereich benachbart zu den Extremwerten können berechnet und zusätzlich oder alternativ als Grundlage für die Bestimmung der vorbestimmten Länge der anzupassenden Endbereiche verwendet werden. Die Steigungswerte geben an, ob die "Hügel" oder "Täler" des nachgebildeten Fahrbahnbelages eher spitz verlaufen oder eher flach ansteigen bzw. abfallen. Bei flach ansteigenden bzw. abfallenden Höhenwerten, das heißt kleinen Steigungswerten der Höhenwerte um die Extremalwerte herum, wird die vorbestimmte Länge bevorzugt größer, zum Beispiel 10 % der Gesamtlänge des erfassten streifenförmigen Abschnittes, gewählt. Bei größeren Steigungswerten wird eine kürzere vorbestimmte Länge gewählt, zum Beispiel 1 % der Gesamtlänge des erfassten Abschnittes.

Selbstverständlich kann die vorbestimmte Länge der Endbereiche auch in Längenwerten vorgegeben werden, z.B. 1cm, 10 cm, 25cm oder mehr als 25cm. Es ist zu beachten, dass selbstverständlich auch nur einer der beiden Endbereiche des Abbildes angepasst wird.

Ein Anpassen der vorbestimmten Längen des Endbereiches, in dem Höhenwerte angepasst werden können, ist insofern vorteilhaft, dass unterschiedlichste Fahrbahnbeläge bzw. deren Oberflächenkonturen möglichst standardisiert und somit schnell bearbeitet und deren Endbereiche aufeinander angepasst werden können. Dies macht die Herstellung weniger aufwendig.

Ferner können die beiden Längskanten digital zusammenfügt werden, so dass ein ringförmiges Abbild des erfassten Abschnitts mit einem Übergang zwischen den beiden Längskanten geschaffen werden kann.

*"Digitales Zusammenfügen der Längskanten"* bedeutet, dass an einem Computer oder einer ähnlichen Verarbeitungsvorrichtung das Abbild des erfassten streifenförmigen Abschnittes in eine ringförmige Struktur überführt werden kann, wobei die beiden Längskanten des Abbildes des erfassten streifenförmigen Abschnittes aneinander stoßen und einen Übergang bilden. Durch das Zusammenfügen entsteht ein ringförmiges Abbild des erfassten Abschnittes.

Vorteilhaft ist dabei, dass das Überführen des nachzubildenden Fahrbahnbelages von einer ebenen, nicht gekrümmten Fläche in eine gekrümmte Struktur, die auf eine Rolle eines Rollenprüfstandes montiert werden kann, ohne großen Aufwand erstellt werden kann. Insbesondere entfällt zum Beispiel der Modellieraufwand zum Herstellen von gekrümmten Gussformen bei herkömmlichen Verfahren.

Ein weiterer Vorteil der Erstellung eines digitalen ringförmigen Abbildes ist, dass die in Längsrichtung des Abbildes verlaufende Längenskala auf Grad normiert werden kann. Dabei kann eine Längskante bei 0° und die andere Längskante bei 360° positioniert werden.

Vorteilhaft ist bei der erfindungsgemäßen Normierung, dass eine Unabhängigkeit von Fertigungstoleranzen des Außenumfanges der Rollen des Rollenprüfstandes erreicht wird.

Ferner kann das Erfassen des Fahrbahnbelages mittels eines optischen Erfassungsmittels durchgeführt werden. Die Oberflächenkontur des streifenförmigen Abschnittes kann derart erfasst und digitalisiert werden, dass für eine vorbestimmte Anzahl Punkte des streifenförmigen Abschnittes jeweils ein Höhenwert ermittelt werden kann.

Die vorbestimmte Anzahl Punkte bezieht sich auf die Anzahl xy-Punkte des erfassten Abschnittes, für die ein Höhenwert erfasst wird.

Das optische Erfassungsmittel kann insbesondere eine Stereokamera (z.B. zur Durchführung eines Lichtschnittverfahrens) oder ein Laser sein, mit dem Höhenwerte einer Oberflächenkontur erfasst werden können und xy-Werten (bzw. Quer- und Längspositionswerten) der Fläche zugeordnet werden können.

Die vorbestimmte Anzahl Punkte, die innerhalb des streifenförmigen Abschnittes erfasst werden, um Höhenwerte zuzuordnen, kann voreingestellt werden. Je größer die vorbestimmte Anzahl Punkte gewählt wird, desto genauer kann die Oberflächenkontur des erfassten Abschnittes dargestellt werden. Bevorzugt ergibt sich eine gute Abbildungsgenauigkeit, wenn zumindest 10 Punkte je cm2 erfasst werden. Optimaler ist im Hinblick auf eine gute Abbildungsgenauigkeit, wenn eine höhere Anzahl Punkte erfasst wird, z.B. zumindest 100 Punkte je cm2. Ferner kann die Dichte der Punkte auch 10000 Punkte je cm2 oder höher betragen.

Das Erfassen der Oberflächenkontur mittels eines optischen Erfassungsmittels ist schnell und einfach und automatisierbar.

Desweiteren kann das digitale Abbild derart zusammengefügt werden, dass der Übergang an den beiden Längskanten an der Position 0° bzw. 360° positioniert sein kann und die erfasste Oberflächenkontur auf der Außenmantelfläche des ringförmigen Abbildes angeordnet sein kann.

Das Erzeugen des Fahrbahnbelagelementes kann mittels einer dreidimensionalen Drucktechnik durchgeführt werden. Das Erzeugen des Fahrbahnbelagelementes kann mittels einer eines dreidimensionalen Fräsverfahrens durchgeführt werden. Das Erzeugen des Fahrbahnbelagelementes kann mittels einer Kombination einer dreidimensionalen Drucktechnik mit einem dreidimensionalen Fräsverfahren durchgeführt werden. Das ringförmige Abbild kann einstückig gedruckt und/oder gefräst werden.

Das ringförmige Abbild (oder generell der Druck) kann auch auf Trägerplatten gedruckt werden. Die Trägerplatten können z.B. aus Metall, Faserverbundwerkstoff oder Kunststoff bestehen.

Das Fahrbahnbelagelement kann auch direkt auf der Rolle bzw. deren Rollenmantel erzeugt werden. Beispielsweise kann dazu ein um die Rolle umlaufendes Druck- oder Fräswerkzeug eingesetzt werden.

Das Werkzeug kann das Fahrbahnbelagelement (bzw. die abzubildende Oberflächenkontur) in den Rollenmantel der Rolle selbst oder in einen auf dem Rollenmantel aufgebrachten Belag einbringen, z.B durch Fräsen, Schleifen oder dgl.

Ferner kann das Fahrbahnbelagelement auch direkt auf der Rolle auftragen werden, z.B. mittels einer 3D-Drucktechnik. Ein Kombinationsherstellungsvefahren aus 3-D-Drucken und Fräsen, Schleifen bzw. Abtragen ist selbstverständlich auch möglich.

Weiter kann z.B. auch die Rolle während des Direkt-auf-der-Rolle-Herstellens gedreht werden und ein (oder mehrere) zur Rolle positionsfest angeordnetes 3-D-Herstellungswerkzeug, z.B. ein 3D-Druckwerzeug, ein Fräswerkzeug, ein Schleifwerkzeug oder dgl., erzeugt das Fahrbahnbelagelement auf der sich drehenden Rolle.

Das Herstellen direkt auf der Rolle hat den Vorteil, dass die üblicherweise notwendigen, weiteren Schritte des Montierens der Fahrbahnbelagelemente auf der Rolle entfallen können. Auch wird durch das direkte Herstellen eine optimale Anpassung des Fahrbahnbelagelementes an die Oberfläche der Rolle gewährleistet, so dass ein sicherer Sitz des Fahrbahnbelagelementes auf der Rolle sichergestellt ist. Dies verhindert u.a. ein mögliches (lokales) Ablösen des Fahrbahnbelagelementes von der Rolle während einer Prüfung.

Die dreidimensionale Drucktechnik kann insbesondere Stereolithographie, Lasersintern, 3D-Druck und Fused Deposition Modeling umfassen.

Das dreidimensionale Fräsverfahren bzw. Fräsen kann zum Beispiel mittels CNC-Fräsen durchgeführt werden, zum Beispiel basierend auf CAD-Daten.

*"Einstückig"* bedeutet, dass das ringförmige Abbild derart ausgedruckt bzw. gefräst werden kann, dass das Fahrbahnbelagelement nach dem Herstellen als ein Stück vorliegen kann.

Die Herstellung mittels eines dreidimensionalen Herstellungsverfahrens erhöht die Herstellungsgeschwindigkeit bzw. verkürzt die Herstellungszeit drastisch.

Mittels der dreidimensionalen Herstellungstechnik kann anstatt des gesamten ringförmigen Abbildes auch lediglich ein oder mehrere kreisbogenförmige Fahrbahnbelagelemente erstellt werden. Das ringförmige Fahrbahnbelagelement kann anschließend in Kreisbogensegmente zerteilt werden. Es kann ein Kreisbogenelement mit einer vorbestimmten Kreisbogenlänge des ringförmigen Abbildes als kreisbogenförmiges Fahrbahnbelagselement (5a) gedruckt und/oder gefräst werden.

Die vorbestimmten Kreisbogenlänge wird insbesondere im Hinblick auf den Durchmesser der Rollen und die erforderliche Anzahl Teilsegmente bestimmt. So kann z.B. bei einer Rolle mit 1,90 m Durchmesser und 6-8 Teilsegmenten die vorbestimmte Kreisbogenlänge der Fahrbahnbelagelemente ca. 0,7 m -1 m betragen.

Wenn mehrere Fahrbahnbelagelemente je Rolle vorgesehen sind, z.B. 6 oder 8 Stück, kann das erfindungsgemäße Anpassen der äußeren Endbereiche/Längskanten an jedem Übergang zwischen zwei Fahrbahnbelagelementen durchgeführt werden.

Im Hinblick auf die Herstellung der Fahrbahnbelagelemente ist eine erhöhte Herstellungsflexibilität gegeben, da u.a. ein kompletter Ring als Fahrbahnelement oder mehrere Teilsegmente eines Rings als Fahrbahnbelagelemente herstellbar sind.

Ferner kann das erzeugte Fahrbahnbelagselement aus Kunststoff, anorganischem Material, insbesondere Keramik, und/oder Metall bestehen.

Grundsätzlich sind alle Materialien, die in einem dreidimensionalen Herstellungsverfahren verwendet werden können, geeignet für die Erzeugung bzw. Herstellung des Fahrbahnbelagelementes. Besonders bevorzugt wird Kunststoff, zum Beispiel ABS, anorganische Material, zum Beispiel Keramik, und auch Metall.

Somit kann das Fahrbahnbelagelement mit höchstmöglicher Flexibilität im Hinblick auf die Werkstoffwahl hergestellt werden.

Zusammenfassend ermöglicht das erfindungsgemäße Verfahren, dass Fahrbahnbelagelemente weniger aufwendig hergestellt werden können, und zwar mittels eines 3D-Herstellungsverfahrens. Ferner wird ermöglicht, dass insbesondere Störgeräuschquellen weniger aufwendig entfernt werden können.

Die Erfindung wird im Folgenden exemplarisch mit Bezug auf die beigefügten, schematischen Zeichnungen beschrieben. Es zeigen
Figur 1 ein Flussdiagramm eines Beispiels des erfindungsgemäßen Verfahrens,
Figur 2 eine skizzenhafte Draufsicht eines Abbildes und dessen Querschnitt,
Figur 3 einen skizzenhaften Querschnitt eines Fahrbahnbelagelementes und eine Vergrößerung eines Übergangs, und
Figur 4 einen skizzenhaften Querschnitt eines Fahrbahnbelagelementes, das in mehrere Elemente/Segmente geteilt wurde.

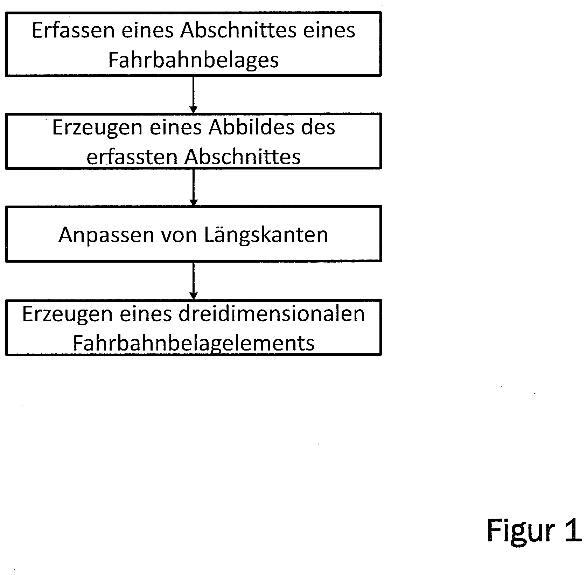

Fig. 1 zeigt einen Ablauf des erfindungsgemäßen Herstellungsverfahrens von Fahrbahnbelagelementen mit den Schritten: Erfassen eines Abschnittes 1 eines Fahrbahnbelages, Erzeugen eines Abbildes 3 des erfassten Abschnittes 1 und Erzeugen eines (dreidimensionalen) Fahrbahnbelagelementes 5. Weiterhin optional Anpassen der Längskanten 2a, 2b.

Das Erfassen eines im Wesentlichen streifenförmigen Abschnittes 1 eines Fahrbahnbelages erfolgt mittels eines optischen Erfassungsmittels 6, zum Beispiel einem Lasersystem oder einer Stereokamera, wobei ein zu erfassender Abschnitt 1 eines Fahrbahnbelages entlang einer vorbestimmten Länge L abgefahren und dabei eine Oberflächenkontur erfasst wird. Das Erfassen ist z.B. ein Einscannen, Fotografieren, usw. Die vorbestimmte Länge L des erfassten Abschnittes 1 stimmt im Wesentlichen mit dem Umfang der Rollen U_{R} eines Rollenprüfstandes überein. Die erfasste Breite B des erfassten Abschnittes 1 des Fahrbahnbelages ist abhängig von der maximal einlesbaren Breite, die durch das optische Erfassungsmittels 6 vorgegeben wird. Die vorbestimmte Breite B des erfassten Abschnittes 1 soll im Wesentlichen mit der Breite B_{R} der Rollen des Rollenprüfstandes übereinstimmen. Falls die maximal erfassbare Breite des optischen Erfassungsmittels 6 kleiner ist als die vorbestimmte Breite B des zu erfassenden Abschnittes 1, können mehrere streifenförmige Abschnitte 1 des zu erfassenden Fahrbahnbelages, z.B. hintereinander, erfasst werden und anschließend z.B. digital zusammengefügt werden.

Der Schritt des Erzeugens eines (digitalen) Abbildes 3 des erfassten Abschnittes 1 erfolgt entweder integriert bzw. gleichzeitig zu dem Erfassen des Abschnittes 1, zum Beispiel mittels einer geeigneten Einrichtung im optischen Erfassungsmittel 6, oder separat. Erfolgt der Schritt separat, können zum Beispiel die Daten des erfassten Abschnittes 1 vom optischen Erfassungsmittel 6 an eine Datenverarbeitungsanlage (nicht gezeigt) übermittelt bzw. gesendet werden, in der basierend auf den erfassten Daten des optischen Erfassungsmittels 6 das Abbild 3 des erfassten Abschnittes 1 erzeugt wird. Das Abbild 3 des erfassten Abschnittes 1 ist im Wesentlichen eine Oberflächenkontur bzw. Höhenwertverteilung über die Fläche des erfassten Abschnittes 1, das heißt es sind Höhenwerte (z-Werte) einzelnen Punkten (Positionen) innerhalb der Fläche des erfassten Abschnittes 1 mit einer bestimmten x/y-Koordinate (Längs-/Querrichtungsposition) zugeordnet. Im einfachsten Fall kann das Abbild 3 des erfassten Abschnittes 1 eine Tabelle oder eine Matrix sein, die zu den erfassten Positionen/Punkten innerhalb der Fläche des erfassten Abschnittes 1 die erfassten Höhenwerte (z-Werte) speichert. Bevorzugt ist das Abbild 3 eine grafische Darstellung der erfassten Oberflächenkontur des erfassten Abschnittes 1, zum Beispiel eine Bilddatei oder eine 3D-Kontruktionsdatei.

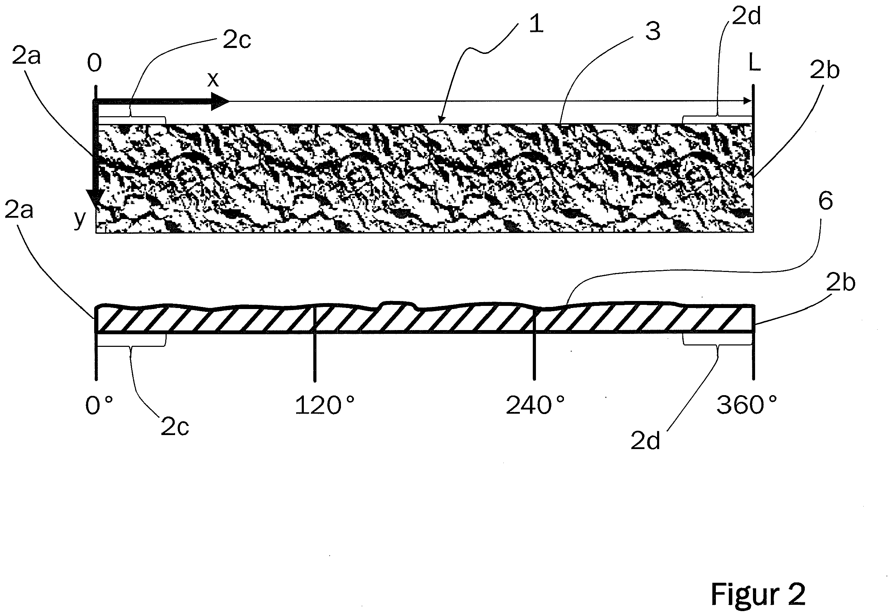

Ein stark schematisiertes Abbild 3 des erfassten Abschnittes 1 wird in Fig. 2 wiedergegeben. Die obere Darstellung in Fig. 2 zeigt eine Draufsicht des Abbildes 3 mit einer schematischen Höhenwertverteilung mittels hellerer und dunklerer Flächen bzw. Punkten. Weiterhin zeigt die obere Darstellung in Fig. 2 die x-Richtung, die in Längsrichtung des streifenförmigen Abbildes 3 angeordnet ist, und die y-Richtung, die in Querrichtung des Abbildes 3 angeordnet ist. Weiterhin ist aus der oberen Darstellung in Fig. 2 ersichtlich, dass Längskanten 2a, 2b das Abbild 3 in Längsrichtung jeweils begrenzen. An die Längskanten 2a, 2b schließen sich jeweils Endbereiche 2c, 2d des Abbildes 3 mit einer vorbestimmten Länge in Längsrichtung (-Richtung) an. Die Gesamtlänge des Abbildes 3 entspricht im Wesentlichen der Gesamtlänge des erfassten Abschnittes 1, d.h. das Abbild hat im Wesentlichen die Länge L. Die untere Darstellung in Fig. 2 ist ein Querschnitt (Längsprofil) des Abbildes 3 an einer nicht weiter spezifizierten Position in Querrichtung des Abbildes 3. Weiterhin ist in der unteren Darstellung der Fig. 2 eine optionale Normierung auf Grad in Längsrichtung dargestellt. So ist der Wert 0° auf eine (vordere) Längskante 2a gesetzt und der Wert 360° auf eine (hintere) Längskante 2b.

Der Schritt des Anpassens der Längskanten 2a, 2b des Abbildes 3 ist besonders bevorzugt, da der ebene, nicht gekrümmte erfasste Abschnitt 1 in eine gekrümmte Struktur überführt wird. Konkret wird das Abbild 3 auf den Radius der Rolle angepasst. Dies wird erfindungsgemäß dadurch erreicht, dass die beiden Längskanten 2a, 2b durch ein Krümmen bzw. Biegen des digitalen Abbildes 3 zusammengeführt werden. Im einfachsten Fall ist dies z.B. mittels eines Bildbearbeitungs- und/oder Konstruktionsprogramms möglich, wenn das Abbild 3 in grafischer Form vorliegt. Durch das Biegen bzw. Krümmen des Abbildes 3 auf den Radius der Rolle(n) entsteht ein digitales ringförmiges Abbild 3a. Dabei ist die Oberflächenkontur des erfassten Fahrbahnbelages auf der äußeren Mantelfläche des ringförmigen Abbildes 3a angeordnet. Bevorzugt werden die beiden Längskanten 2a, 2b derart zusammengefügt, dass die Position eines Überganges 4 zwischen den beiden Längskanten 2a, 2b bei 0° bzw. 360° angeordnet ist.

Das Überführen des streifenförmigen Abschnittes in die gekrümmte Struktur kann bevorzugt dadurch erfolgen, dass zunächst ein Volumenmodell aus dem streifenförmigen Abschnitt generiert wird. Dieser Vorgang wird bevorzugt mittels eines Computers durchgeführt.

Ferner kann eine neutrale Ebene in z-Richtung festgelegt werden, d.h. es wird eine Nullebene in z-Richtung definiert. Die Nullebene kann besonders bevorzugt so gewählt werden, dass diese entlang einer Linie mittlere Rauigkeit der Oberflächenkontur in z-Richtung angeordnet ist. Eine Anordnung der Nullebene entlang einer Linie maximaler/minimaler Höhe des Profils in z-Richtung oder dazwischen ist aber auch möglich.

Wenn die Nullebene festgelegt wurde, kann diese die maximale Konturhöhe in z-Richtung definieren, d.h. die Nullebene kann die (spätere) Aufstandsfläche für die Fahrzeugreifen darstellen. Wenn die Nullebene beispielsweise durch die mittlere Konturhöhe/Rauigkeit der Oberflächenkontur in z-Richtung gelegt wurde, können die über die Nullebene in z-Richtung herausragende Konturbereiche abgeschnitten werden, so dass über den gesamten streifenförmigen Abschnitt hinweg eine in z-Richtung aufeinander angepasst (eben gemachte) Höhenverteilung vorliegt. Klarstellend ist jedoch zu bemerken, dass durch das "Eben machen" der Oberflächenkontur nicht die Kontur selbst entfernt wird; das "Eben machen" bezieht sich lediglich auf die Maxima in z-Richtung der Oberflächenkontur.

Die Anpassung der Längskanten/Endbereiche aufeinander erfolgt bevorzugt nach dem Festlegen der Nullebene.

Ferner kann auch eine Unterkante (in z-Richtung) für das erzeugte Volumenmodell (bzw. die Volumenmodelle) des streifenförmigen Abschnittes erzeugt werden. Dazu kann z.B. ein fester, konstanter z-Wert bestimmt werden, an dem entlang die Unterkante des Volumenmodells (der Volumenmodelle) verläuft.

Im Anschluss an die oben genannten bevorzugten Schritte des Herstellung einer gekrümmten Struktur/eines gekrümmten Volumenmodells (oder mehrerer gekrümmter Volumenmodelle) kann das Volumenmodell mittels Computer von einer nicht gekrümmten in eine gekrümmte Struktur umgerechnet werden.

Wenn mehrere Fahrbahnbelagelemente auf einer Rolle angeordnet werden sollen, kann das obig erläuterte Verfahren auch dahingehend modifiziert werden, dass der streifenförmige Abschnitt in ein Volumenmodell überführt wird und daraus einzelne Segmente, z.B. 6-8 Stück für einen Rollenumfang, herausgeschnitten werden bzw. der Abschnitt in z.B. 6-8 Segmente unterteilt wird. Die weiteren Schritte des Einfügens einer Nullebene, des Anpassens der Längskanten, des Anpassens der Unterkante und das Krümmen können wie oben geschildert auch für die mehreren Segmente/Volumenmodelle durchgeführt werden:

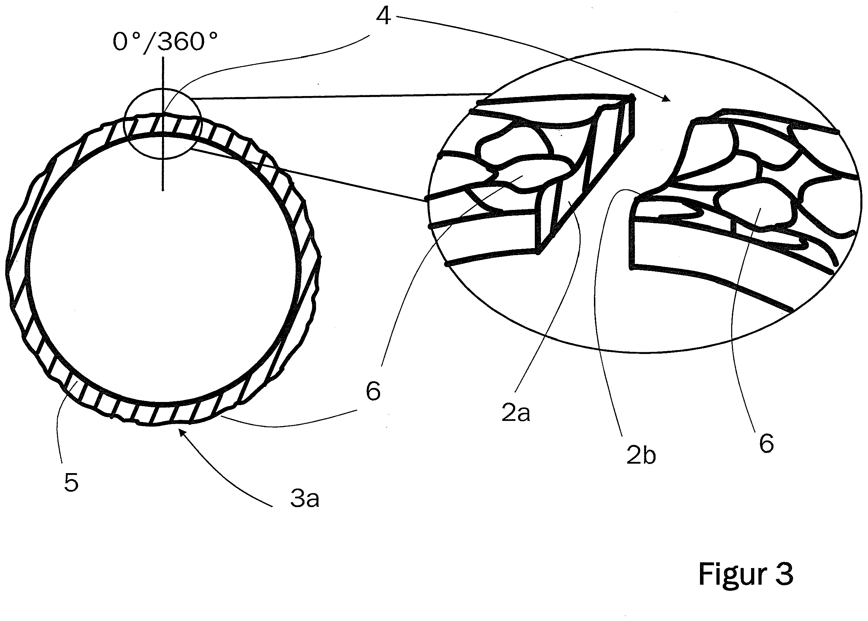

Fig. 3 zeigt in sehr schematischer Weise das ringförmige Abbild 3. Weiterhin zeigt die Vergrößerung eines Ausschnittes in Fig. 3 eine Vergrößerung des Überganges 4 zwischen den beiden Längskanten 2a, 2b. Lediglich aus Gründen der besseren Veranschaulichung sind die beiden Längskanten 2a, 2b am Übergang 4 beabstandet zueinander (innerhalb der Vergrößerung der Fig. 3) gezeigt. Wie sich aus der vergrößerten Darstellung der Fig. 3 zeigt, passen die Querprofile (Höhenprofile in Querrichtung) der beiden Längskanten 2a, 2b im Wesentlichen übereinander, das heißt sie (konkret: die Höhenwerte) sind im Wesentlichen miteinander übereinstimmend. Die Übereinstimmung, die in Fig. 3 dargestellt ist, wurde z.B. mittels eines Konstruktions- oder Grafikprogrammes erzeugt und/oder mittels Anpassen der numerischen Höhenwerte. Die Übereinstimmung der Querprofile der beiden Endbereiche 2a, 2b ermöglicht, dass der Übergang 4 möglichst wenig Störgeräusche beim Überrollen des Übergangs 4 mit einem Fahrzeugreifen eines getesteten Kraftfahrzeuges erzeugt. Besonders bevorzugt sind auch die sich an die Längskanten 2a, 2b anschließenden Endabschnitte 2c, 2d (siehe Fig. 2) aneinander angepasst, so dass der Übergang 4 noch effektiver Störgeräusche unterbindet bzw. Störgeräusche vermieden werden.

Für das erfindungsgemäße Anpassen der Längskanten 2a, 2b und/oder Endabschnitte 2c, 2d stehen mehrere (alternative) Möglichkeiten zu Verfügung. Ein besonders einfaches Verfahren zur Anpassung umfasst, dass das Höhenprofil in Querrichtung (Querprofil) der einen Längskante 2a, 2b mit einer vernachlässigbaren Tiefe/Länge in Längsrichtung des Abbildes 3 kopiert wird und an der Stelle der anderen Längskante 2a,2b eingefügt wird, so dass die ursprünglich erfasste andere Längskante 2b ersetzt wird. Z.B. wird die vordere Längskante 2a über die hintere Längskante 2b gelegt und die hintere Längskante 2b dadurch ersetzt. Selbstverständlich ist dies auch umgekehrt möglich im Hinblick auf die vordere und hintere Längskante 2a, 2b. Das Vorgehen ermöglicht, dass beim Zusammenfügen der beiden Längskanten 2a, 2b zu dem ringförmigen Abbild 3a zumindest die beiden Profile der Längskanten 2a, 2b übereinstimmen und die Anpassung schnell durchführbar ist. Das Kopieren und Ersetzen kann mittels eines Grafikprogrammes erfolgen. Es können z.B. auch die konkreten numerischen Höhenwerte verwendet werden, insbesondere wenn das Abbild 3 als Datenmatrix oder Datentabelle vorliegt.

Ferner kann auch ein Endabschnitt 2c (dessen Oberflächenkontur) kopiert werden und an der Stelle des anderen Endabschnittes 2d eingefügt werden, so dass die Höhenwertverteilung des anderen Endabschnittes 2d ersetzt wird. Im Unterschied zum weiter oben beschriebenen Vorgehen wird folglich nicht nur die (äußerste) Längskante 2a, 2b mit vernachlässigbarer Tiefe in Längsrichtung kopiert und ersetzt, sondern ein (End-)Abschnitt mit einer bestimmten Länge in Längsrichtung. Die vorbestimmte Länge des Endabschnittes 2c, dessen Oberflächenkontur kopiert wird, kann zum Beispiel danach bestimmt werden, dass zwei gut übereinstimmende Positionen/Stellen der beiden Endabschnitte 2c, 2d ermittelt werden und der zu kopierende Endabschnitt 2c, 2d bis zu dieser Stelle kopiert wird. Auch dieses Verfahren ist schnell und wenig aufwendig durchführbar.

Weiterhin können die Oberflächenkonturen in einem der beiden Endabschnitte 2c, 2d oder in beiden Endabschnitten 2c, 2d angepasst werden, wobei die Oberflächenkontur wie bereits bei den oben beschriebenen Möglichkeiten digital verändert wird. Die vorbestimmte Länge der Endabschnitte 2c, 2d, in der die Oberflächenkontur geändert wird, kann dabei abhängig von der Anzahl Extremalwerte (Minima und/oder Maxima) je Fläche bestimmt werden. Zusätzlich oder Alternativ können Steigungswerte, die benachbart zu den Minima und/oder Maxima angeordnet sind, zur Bestimmung der Länge anzupassenden Endabschnitte 2c, 2d herangezogen werden.

Ein besonders einfaches Verfahren zur Anpassung der Oberflächenkontur bzw. der Höhenwerte innerhalb der Endbereiche 2c, 2d basiert darauf, dass ein Anwender das digitale Abbild 3 visuell dargestellt vorliegen hat und mittels digitaler Grafikanwendungen Höhen und Tiefen des Abbildes 3 innerhalb der beiden Endabschnitte 2c, 2d aufeinander anpasst. Dies kann im einfachsten Fall zum Beispiel mittels eines Bildbearbeitungsprogramms manuell erfolgen. Weiterhin kann die Anpassung auch zum Beispiel mittels 3D-Konstruktionstools erfolgen, zum Beispiel mittels Spline-Anpassungsverfahren oder automatisierter Anpassungsroutinen, die auf den oben beschriebenen Anpassungsmöglichkeiten beruhen.

Die vorbestimmte Länge L_{EB} der Endabschnitte 2c, 2d kann bevorzugt im Wesentlichen 1 % der Gesamtlänge L des Abbildes 3 des erfassten Abschnittes 1 betragen, insbesondere bei einer Extremalwertdichte von mehr als 5000 Extremalwerten je m². Die vorbestimmte Länge L_{EB} der Endbereiche 2c, 2d kann bevorzugt 10 % der Gesamtlänge L des Abbildes 3 des erfassten Abschnittes 1 betragen, wenn die Extremalwertdichte kleiner ist als 5000 Extremalwerte je m². Extremalwerte bezeichnen hierbei lokale Minima und/oder Maxima.

Ferner kann die Anpassung der Längskanten 2a, 2b und/oder der Endabschnitte 2c, 2d auch mittels eines vorbestimmten Abweichungswertes Δ durchgeführt werden. Der Abweichungswert Δ ergibt sich bertragsmäßig aus dem Quotienten einer Differenz zweier Höhenwerte, die benachbart zueinander angeordnet sein können, und einem der beiden Höhenwerte der Differenz. Bei direkt benachbarten Höhenwerten wird ein sehr kleiner Abweichungswert Δ bevorzugt, z.B. weniger als 1% oder weniger als 5%. Dadurch wird ein sehr gut aufeinander abgestimmter Übergang 4 erreicht. Bei nicht direkt benachbarten Höhenwerten oder bei geringeren Anforderungen an die Anpassung kann der Abweichungswert Δ auch bis zu 50% betragen.

Selbstverständlich kann bei der Anpassung lediglich einer der beiden Endbereiche 2c, 2d auf den jeweils anderen Endbereich 2c, 2d angepasst werden oder es können beide Endbereiche 2c, 2d zusammen aufeinander abgestimmt werden.

Der Schritt des Herstellens des Fahrbahnbelagelementes 5 mittels eines 3D-Druckverfahrens und/oder 3D-Fräsverfahrens umfasst, dass das digitale Abbild 3 oder das ringförmige Abbild 3a mittels einer geeigneten 3D-Druck- und/oder Fräsvorrichtung erzeugt wird. 3D-Druckverfahren basieren im Wesentlichen darauf, dass das dreidimensionale Abbild 3 schichtweise aufgebaut wird. Verfahrensabhängig beträgt die Schichtdicke zwischen wenigen Mikrometern und ca. ¼ mm. Die Schichtdicke beeinflusst die vertikale Auflösung, wobei eine dickere Schichtdicke zu einer geringeren Auflösung führt.

3D-Herstellung mittels Stereolithographie ergibt insbesondere sehr glatte Oberflächen des dreidimensionalen Fahrbahnbelagelementes 5. Das Fahrbahnbelagelement 5 wird in einem Becken, dass mit flüssigem (bevorzugt) Kunstharz befüllt ist, erstellt, wobei ein UV-Laser punktuell das Kunstharz aushärtet. Die Aushärtung erfolgt schichtweise. Überhängende, ausgehärtete Bestandteile des Fahrbahnbelagelementes 5 tragen sich nicht selbst, so dass eine Stützstruktur aus einem weiteren Material angelegt werden muss, die nach der Herstellung des Fahrbahnbelagelementes 5 entfernt wird. Vorteilhafterweise kann mittels Stereolithographie insbesondere auch lichtdurchlässiges Material verwendet werden.

Sowohl Kunststoffe als auch Metall können mittels Lasersintern verarbeitet werden. Beim Lasersintern wird mittels eines Schiebers das Rohmaterial in Pulverform in der vorbestimmten Schichtdicke auf einem Drucktisch verteilt. Anschließend härtet ein Laser an den vorbestimmten Stellen das Pulver durch Erhitzen aus. Der Vorgang wird solange wiederholt, bis das Fahrbahnbelagelement 5 vollständig geformt ist. Vorspringende Teile können auch ohne ein zweites Stützmaterial hergestellt werden. Die oft raue Oberfläche, die beim Lasersintern entsteht, kann durch einen Überzug aus Kunststoff geglättet werden.

Weiterhin kann zur Herstellung der Fahrbahnbelagelemente 5 auch ein 3D-Drucker verwendet werden, der eine Kombination aus Lasersintern und zweidimensionalem Drucken mit einem Tintenstrahler darstellt. Der Druckkopf, der auch verschiedenfarbige Tinte verteilen kann, gibt Tinte auf eine dünne Schicht aus gipsähnlichem Pulver, wobei Bindemittel, das der Tinte zugemischt ist, die bedruckten Stellen aushärten lässt. Schichtweise kann somit das Fahrbahnbelagelement 5 erstellt werden. Das fertige Fahrbahnbelagelement 5 kann mit Kunstharz getränkt werden, um eine zusätzliche Stabilität und/oder bessere Oberflächenqualität zu erzeugen.

Ferner bietet sich zur Herstellung der Fahrbahnbelagelemente 5 das besonders einfache und wirtschaftlich durchführbare Fused Deposition Modeling an, wobei ein geschmolzener Kunststoff aus einer Düse gespritzt wird, so dass schichtweise die gewünschte Form des Fahrbahnbelagelementes 5 mit einem Strich aus weichem Plastik gezeichnet wird. Besonders bevorzugt wird hierbei ABS-Kunststoff verwendet.

Vorteilhafterweise ermöglichen alle diese 3D-Herstellungsverfahren ein schnelles Herstellen der Fahrbahnbelagelemente 5 mit einer sehr detailgetreuen Wiedergabe der Oberflächenkontur des Fahrbahnbelages.

Desweiteren bietet sich auch die Herstellung des Fahrbahnbelagelementes 5 mittels eines CNC-Fräsers an, der das dreidimensionale Fahrbahnbelagelement 5 aus einem Rohling, bevorzugt aus Metall oder Keramik, ausfräst. Dazu ist besonders bevorzugt das Abbild 3 bzw. das ringförmige Abbild 3a als eine CAD-Datei vorhanden. Vorteilhaft beim 3D-Fräsen ist, dass das Fahrbahnbelagelement 5 aus einem Stück Rohling herausgefräst wird, so dass sehr gute Festigkeitswerte des Fahrbahnbelagelementes 5 erreicht werden.

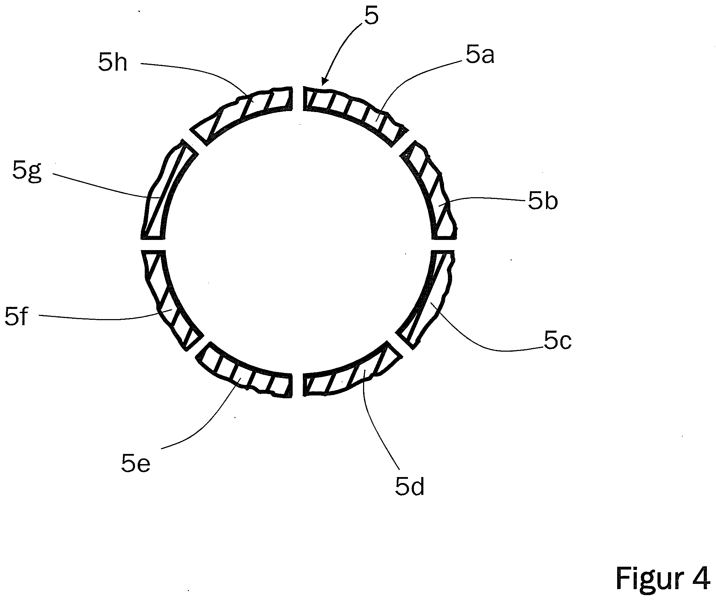

Wie in Fig. 3 gezeigt, kann mittels des 3D-Herstellungsverfahrens das ringförmige Abbild 3a einstückig ausgedruckt werden oder, wie in Fig. 4 gezeigt, einzelne Kreisbogensegmente 5a bis 5h ausgedruckt werden. Weiterhin kann auch das ringförmige Abbild 3a einstückig ausgedruckt werden und anschließend zerteilt werden. Dazu können zum Beispiel Sollbruchstellen mitgedruckt werden oder die Zerteilung erfolgt z.B. durch Zersägen oder andere Trenntechniken.

Zusammenfassend ermöglicht das erfindungsgemäße Verfahren, dass schnell und einfach eine exakte Nachbildung einer Oberflächenkontur eines Fahrbahnbelages in Form eines Fahrbahnbelagelementes 5 für Rollen von Rollenprüfständen hergestellt werden kann. Die Anpassung des Übergangs 4 zwischen den beiden Längskanten 2a, 2b oder Endabschnitten 2c, 2d kann mit sehr geringem Aufwand durchgeführt werden und Störgeräusche, die insbesondere beim Überrollen eines nicht angepassten Übergangs 4 auftreten, können optimal reduziert werden.
1 streifenförmiger Abschnitt eines Fahrbahnbelages
2a vordere Längskante des erfassten Abschnitts
2b hintere Längskante des erfassten Abschnitts
2c vorderer Endabschnitt des erfassten Abschnitts
2d hinterer Endabschnitt des erfassten Abschnitts
3 Abbild des erfassten Abschnitts
3a Ringförmiges Abbild
4 Übergang
5, 5a, 5b, .. Fahrbahnbelagsegment(e)
6 Optisches Erfassungsmittel
L Länge des erfassten Fahrbahnbelagabschnittes
B Breite des erfassten Fahrbahnbelagabschnittes
U_{R} Umfang der Rollen eines Rollenprüfstandes
B_{R} Breite der Rollen eines Rollenprüfstandes
L_{EB} Länge des Endbereichs
Δ vorgebestimmter Abweichungswert

## Patentansprüche

1. Verfahren zur Herstellung von Fahrbahnbelagelementen, die auf Rollen von Rollenprüfständen montiert werden, umfassend
- Herstellen von Herstellungsdaten zum Erzeugen eines digitalen Abbildes (3) eines streifenförmigen Abschnittes (1) mit Höhenwerten gemäß der Oberflächenkontur eines erfassten Fahrbahnbelages, wobei der erfasste streifenförmige Abschnitt (1) in Längsrichtung eine vorbestimmte Länge (L) und in Querrichtung eine vorbestimmte Breite (B) aufweist und der streifenförmige Abschnitt (1) in Längsrichtung jeweils von einer Längskante (2a, 2b) begrenzt wird, und
- Herstellen des Fahrbahnbelagelementes (5) gemäß dem digitalen Abbild (3) mittels einer dreidimensionalen Herstellungstechnik, wobei die dreidimensionale Herstellungstechnik ein 3D-Druckverfahren und/oder ein 3D-Fräsverfahren ist,
**gekennzeichnet dadurch, dass** ein Anpassen der Höhenwerte der beiden Längskanten (2a, 2b) aufeinander derart durchgeführt wird, dass die Höhenwerte der beiden Längskanten (2a, 2b) an gleicher Position in Querrichtung nach der Anpassung um weniger als einen vorgebestimmten Abweichungswert (Δ) voneinander abweichen.

2. Verfahren nach Anspruch 1, wobei die Höhenwerte des digitalen Abbildes (3) der beiden Längskanten (2a, 2b) derart aufeinander angepasst werden, dass Höhenprofile der Längskanten (2a, 2b) in Querrichtung der beiden Längskanten (2a, 2b) nach der Anpassung miteinander übereinstimmten.

3. Verfahren nach zumindest einem der vorangegangen Ansprüche **gekennzeichnet dadurch, dass** das Anpassen der Höhenwerte innerhalb zumindest eines Endbereichs (2c, 2d) des digitalen Abbildes (3), der auf einer Seite von einer der beiden Längskanten (2a, 2b) begrenzt wird, durchgeführt wird, wobei
der zumindest eine Endbereich (2c, 2d) eine vorbestimmte Länge (L_{EB}) in Längsrichtung ausgehend von der den Endbereich (2c, 2d) seitlich begrenzenden Längskante (2a, 2b) aufweist.

4. Verfahren nach Anspruch 3 **gekennzeichnet dadurch, dass** die vorbestimmte Länge (L_{EB}) des zumindest einen Endbereichs (2c, 2d), in dem die Höhenwerte angepasst werden, abhängig von der Anzahl der Maxima und/oder Minima der Höhenwerte in Relation zu der Fläche oder einer Teilfläche des erfassten Abschnittes (1) bestimmt wird und/oder die vorbestimmte Länge (L_{EB}) abhängig von durchschnittlichen Steigungswerten der Höhenwerte, die benachbart zu den Maxima und/oder Minima angeordnet sind, bestimmt wird.

5. Verfahren nach zumindest einem der vorangegangen Ansprüche **gekennzeichnet dadurch, dass** die beiden Längskanten (2a, 2b) digital zusammenfügt werden, so dass ein ringförmiges Abbild (3a) des erfassten Abschnitts (1) mit einem Übergang (4) zwischen den beiden Längskanten (2a, 2b) geschaffen wird.

6. Verfahren nach zumindest einem der vorangegangen Ansprüche **gekennzeichnet dadurch, dass** eine Längenskala in Längsrichtung des Abbildes (3) auf Grad normiert wird, derart, dass die eine Längskante (2a) auf 0° und die andere Längskante (2b) auf 360° gesetzt werden.

7. Verfahren nach zumindest einem der vorangegangen Ansprüche **gekennzeichnet dadurch, dass** das Erfassen des Fahrbahnbelages mittels eines optischen Erfassungsmittels (6) durchgeführt wird, wobei die Oberflächenkontur des streifenförmigen Abschnittes (1) derart erfasst und digitalisiert wird, dass
für eine vorbestimmte Anzahl Punkte des streifenförmigen Abschnittes (1) jeweils ein Höhenwert ermittelt wird.

8. Verfahren nach ; Anspruch 5 **gekennzeichnet dadurch, dass** das digitale Abbild (3) derart zusammengefügt wird, dass der Übergang (4) an den beiden Längskanten (2a, 2b) an der Position 0° bzw. 360° positioniert ist und die erfasste Oberflächenkontur auf der Außenmantelfläche des ringförmigen Abbildes (3a) angeordnet ist.

9. Verfahren nach einem der Ansprüche 5, 8 **gekennzeichnet dadurch, dass** das gesamte ringförmige Abbild (3a) einstückig gedruckt und/oder gefräst wird.

10. Verfahren nach einem der Ansprüche 5, 8, 9 **gekennzeichnet dadurch, dass** ein Kreisbogenelement mit einer vorbestimmten Kreisbogenlänge des ringförmigen Abbildes (3a) als kreisbogenförmiges Fahrbahnbelagselement (5a) gedruckt und/oder gefräst wird.

11. Verfahren nach einem der Ansprüche 5, 8-10 **gekennzeichnet dadurch, dass** das gesamte ringförmige Abbild (3a) einstückig gedruckt und/oder gefräst wird, und das ringförmige Fahrbahnbelagelement (5) anschließend in Kreisbogensegmente zerteilt wird.

12. Verfahren nach zumindest einem der vorangegangen Ansprüche **gekennzeichnet dadurch, dass** das erzeugte Fahrbahnbelagselement (5) aus Kunststoff, anorganischem Material, Keramik, und/oder Metall besteht.

13. Verfahren nach zumindest einem der vorangegangen Ansprüche **gekennzeichnet dadurch, dass** das Fahrbahnbelagelement (5) direkt auf der Rolle hergestellt wird.

14. Fahrbahnbelagselement das mittels eines Verfahrens nach zumindest einem der voranstehenden Ansprüche erzeugt wird.

## Claims

1. A method for manufacturing road surface covering elements that can be mounted on rollers of roll dynamometers, comprising
- producing manufacturing data for generating a digital image (3) of a strip-shaped section (1) with height values according to the surface contour of a detected road surface, wherein the detected strip-shaped section (1) has a predetermined length (L) in the longitudinal direction and has a predetermined width (B) in the transverse direction and said strip-shaped section (1) is delimited in the longitudinal direction by a respective longitudinal edge (2a, 2b), and
- manufacturing said road surface covering element (5) according to said digital image (3) by means of a three-dimensional manufacturing technique, wherein said three-dimensional manufacturing technique is a 3D printing method and/or a 3D milling method,
**characterized in that** an adaptation of the height values of the two longitudinal edges (2a, 2b) to each other is performed such that the height values of both longitudinal edges (2 a, 2b) in the same position in the transverse direction differ by less than a predetermined deviation value (A) after the adaptation.

2. The method according to claim 1, wherein the height values of said digital image (3) of said two longitudinal edges (2a, 2b) are adapted to each other such that height profiles of said longitudinal edges (2a, 2b) in the transverse direction of said two longitudinal edges (2a, 2b) coincide with each other.

3. The method according to at least one of the preceding claims, **characterized in that** the adaptation of the height values within at least one end region (2c, 2d) of said digital image (3) which is delimited on one side by one of said two longitudinal edges (2a, 2b), wherein
said at least one end region (2c, 2d) has a predetermined length (L_{EB}) in the longitudinal direction starting from the longitudinal edge (2a, 2b) laterally delimiting the end region (2c, 2d).

4. The method according to claim 2, **characterized in that** the predetermined length (L_{EB}) of said at least one end region (2c, 2d) in which the height values are adjusted is determined based on the number of maxima and/or minima of the height values in relation to the area or partial area of the detected section (1) and/or said predetermined length (L_{EB}) is determined based on average slope values of the height values located in the vicinity to the maxima and/or minima.

5. The method according to at least one of the preceding claims, **characterized in that** said two longitudinal edges (2a, 2b) are digitally joined together such that an annular image (3a) of the detected section (1) is created, with a transition (4) between said two longitudinal edges (2a, 2b).

6. The method according to at least one of the preceding claims, **characterized in that** a length scale in the longitudinal direction of said image (3) is normalized to degrees such that the one longitudinal edge (2a) is set to 0° and the other longitudinal edge (2b) is set to 360°.

7. The method according to at least one of the preceding claims, **characterized in that** the detection of the road surface covering is carried out by means of an optical detection means (6), wherein the surface contour of said strip-shaped section (1) is detected and digitized such that a respective height value is determined for each of a predetermined number of points of said strip-shaped section (1).

8. The method according to claim 5, **characterized in that** said digital image (3) is assembled in such a way that the transition (4) at said two longitudinal edges (2a, 2b) is positioned at 0° or 360° and the detected surface contour is arranged on the outer circumferential surface of the annular image (3a).

9. The method according to one of the claims 5, 8, **characterized in that** the entire annular image (3a) is printed and/or milled in one piece.

10. The method according to at least one of the claims 5, 8, 9, **characterized in that** an arc element with a predetermined arc length of the annular image (3a) is printed and/or milled as an arc-shaped road surface covering element (5a).

11. The method according to at least one of the claims 5, 8-10, **characterized in that** the entire annular image (3a) is printed and/or milled in one piece and the annular road surface covering element (5) is then divided into arc segments.

12. The method according to at least one of the preceding claims, **characterized in that** the road surface covering element (5) produced is composed of plastic, inorganic material, ceramic, and/or metal.

13. The method according to at least one of the preceding claims, **characterized in that** said road surface covering element (5) is manufactured directly on the roller.

14. A road surface covering element which is produced by means of a method according to at least one of the preceding claims.

## Revendications

1. Procédé de fabrication d'éléments de revêtement de chaussée destinés à être montés sur des rouleaux de bancs d'essai à rouleaux, consistant à :
- établir des données de fabrication pour générer une image numérique (3) d'une portion en forme de bande (1) avec des valeurs en hauteur selon le contour surfacique d'un revêtement de chaussée détecté,
dans lequel la portion en forme de bande (1) détectée présente une longueur prédéterminée (L) en direction longitudinale et une largeur prédéterminée (B) en direction transversale, et la portion en forme de bande (1) est délimitée par une arête longitudinale respective (2a, 2b) en direction longitudinale, et
- fabriquer l'élément de revêtement de chaussée (5) selon l'image numérique (3) par une technique de fabrication tridimensionnelle, la technique de fabrication tridimensionnelle étant un procédé d'impression 3D et/ou un procédé de fraisage 3D,
**caractérisé en ce que**
on réalise une adaptation des valeurs en hauteur des deux arêtes longitudinales (2a, 2b) l'une par rapport à l'autre de telle sorte qu'après l'adaptation, les valeurs en hauteur des deux arêtes longitudinales (2a, 2b) à la même position en direction transversale s'écartent l'une de l'autre de moins d'une valeur d'écart prédéterminée (Δ).

2. Procédé selon la revendication 1,
dans lequel
les valeurs en hauteur de l'image numérique (3) des deux arêtes longitudinales (2a, 2b) sont adaptées l'une à l'autre de telle sorte que des profils en hauteur des arêtes longitudinales (2a, 2b) en direction transversale des deux arêtes longitudinales (2a, 2b) coïncident l'un avec l'autre, après l'adaptation.

3. Procédé selon l'une au moins des revendications précédentes,
**caractérisé en ce que**
l'adaptation des valeurs en hauteur est réalisée à l'intérieur d'au moins une zone d'extrémité (2c, 2d) de l'image numérique (3), qui est délimitée sur un côté par l'une des deux arêtes longitudinales (2a, 2b),
dans lequel
ladite au moins une zone d'extrémité (2c, 2d) présente une longueur prédéterminée (L_{EB}) en direction longitudinale à partir de l'arête longitudinale (2a, 2b) délimitant latéralement la zone d'extrémité (2c, 2d).

4. Procédé selon la revendication 3,
**caractérisé en ce que**
la longueur prédéterminée (L_{EB}) de ladite au moins une zone d'extrémité (2c, 2d) dans laquelle on adapte les valeurs en hauteur est déterminée en fonction du nombre des maximums et/ou des minimums des valeurs en hauteur par rapport à la surface ou à une surface partielle de la portion détectée (1), et/ou la longueur prédéterminée (L_{EB}) est déterminée en fonction des valeurs de croissance moyennes des valeurs en hauteur situées au voisinage des maximums et/ou des minimums.

5. Procédé selon l'une au moins des revendications précédentes,
**caractérisé en ce que**
les deux arêtes longitudinales (2a, 2b) sont assemblées par voie numérique, de sorte qu'il en résulte une image annulaire (3a) de la portion détectée (1) avec une transition (4) entre les deux arêtes longitudinales (2a, 2b).

6. Procédé selon l'une au moins des revendications précédentes,
**caractérisé en ce que**
une échelle de longueur est normalisée en degré en direction longitudinale de l'image (3), de telle sorte que ladite une arête longitudinale (2a) est mise à 0° et l'autre arête longitudinale (2b) est mise à 360°.

7. Procédé selon l'une au moins des revendications précédentes,
**caractérisé en ce que**
la détection du revêtement de chaussée est effectuée à l'aide d'un moyen de détection optique (6), le contour surfacique de la portion en forme de bande (1) étant détecté et numérisé de telle sorte qu'une valeur en hauteur respective est déterminée pour un nombre prédéterminé de points de la portion en forme de bande (1).

8. Procédé selon la revendication 5,
**caractérisé en ce que**
l'image numérique (3) est assemblée de telle sorte que la transition (4) aux deux arêtes longitudinales (2a, 2b) est positionnée à la position de 0° ou de 360°, et le contour surfacique détecté est agencé sur la surface enveloppe extérieure de l'image annulaire (3a).

9. Procédé selon l'une des revendications 5, 8,
**caractérisé en ce que**
l'ensemble de l'image annulaire (3a) est imprimé et/ou fraisé d'un seul tenant.

10. Procédé selon l'une des revendications 5, 8, 9,
**caractérisé en ce que**
un élément d'arc de cercle ayant une longueur d'arc prédéterminée de l'image annulaire (3a) est imprimé et/ou fraisé en tant qu'élément de revêtement de chaussée (5a) en forme d'arc de cercle.

11. Procédé selon l'une des revendications 5, 8 - 10,
**caractérisé en ce que**
l'ensemble de l'image annulaire (3a) est imprimé et/ou fraisé d'un seul tenant, et l'élément de revêtement de chaussée annulaire (5) est ensuite divisé en segments d'arc de cercle.

12. Procédé selon l'une au moins des revendications précédentes,
**caractérisé en ce que**
l'élément de revêtement de chaussée réalisé (5) est constitué en matière plastique, en un matériau inorganique, en céramique et/ou en métal.

13. Procédé selon l'une au moins des revendications précédentes,
**caractérisé en ce que**
l'élément de revêtement de chaussée (5) est réalisé directement sur le rouleau.

14. Élément de revêtement de chaussée réalisé par un procédé selon l'une au moins des revendications précédentes.
